(19) Europäisches Patentamt / European Patent Office / Office européen des brevets

(11) **EP 3 736 083 B1**

(12) **EUROPÄISCHE PATENTSCHRIFT**

(45) Veröffentlichungstag und Bekanntmachung des Hinweises auf die Patenterteilung:
**06.12.2023   Patentblatt 2023/49**

(21) Anmeldenummer: **20173529.7**

(22) Anmeldetag: **07.05.2020**

(51) Internationale Patentklassifikation (IPC):
**B24B 3/02** (2006.01)      **B23C 5/20** (2006.01)
**B27G 13/10** (2006.01)

(52) Gemeinsame Patentklassifikation (CPC):
**B24B 3/02; B23C 5/2247; B27G 13/10**

(54) **VERFAHREN ZUM SCHÄRFEN EINES IN EINEN MESSERKOPF EINSETZBAREN MESSERS UND MESSERKOPF MIT GESCHÄRFTEM MESSER**

METHOD FOR SHARPENING A BLADE WHICH CAN BE INSERTED INTO A CUTTER HEAD AND CUTTER HEAD WITH SHARPENED BLADE

PROCÉDÉ D'AFFÛTAGE D'UNE LAME POUVANT ÊTRE INSÉRÉE DANS UNE TÊTE PORTE-LAME ET TÊTE PORTE-LAME DOTÉE D'UNE LAME AFFÛTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2019   DE 102019111986**

(43) Veröffentlichungstag der Anmeldung:
**11.11.2020   Patentblatt 2020/46**

(73) Patentinhaber: **Leitz GmbH & Co. KG**
**73447 Oberkochen (DE)**

(72) Erfinder:
• **Schlosser, Robert**
**4741 Wendling (AT)**
• **Aicher, Alexander**
**4912 Neuhofen im Innkreis (AT)**
• **Maier, Erich**
**4770 Andorf (AT)**

(74) Vertreter: **Gramm, Lins & Partner**
**Patent- und Rechtsanwälte PartGmbB**
**Frankfurter Straße 3 C**
**38122 Braunschweig (DE)**

(56) Entgegenhaltungen:
EP-A1- 0 938 956      WO-A2-2015/157871
CH-A5- 682 470       DE-T2-602005 001 956
DE-U1-202014 003 962

**Beschreibung**

Die Erfindung betrifft ein Verfahren zum Schärfen eines Messers, insbesondere eines Profilmessers für einen in eine Bearbeitungsmaschine einsetzbaren Messerkopf, das eine Spanfläche, einen dieser gegenüberliegenden Rücken und eine an einem äußeren Ende der Spanfläche angeordnete Hauptschneide aufweist, wobei eine in einem Freiwinkel zur Spanfläche verlaufende Freifläche von der Hauptschneide zum Rücken verläuft, und im Rücken eine in einer Axialrichtung verlaufende Anschlagfläche ausgebildet ist, indem die Spanfläche um einen ersten Betrag abgeschliffen wird.

Ein solches Messer ist beispielsweise aus der EP 0 938 956 A1 bekannt, welche auch die Basis für die Präambel des Anspruchs 1 bildet. Darüber hinaus zeigt die WO2015/157871 ein Messer nach dem Oberbegriff des Anspruchs 12.

Die EP 3 204 202 B1 offenbart einen Messerkopf zur spanenden Bearbeitung von Werkstoffen, insbesondere Holzwerkstoffe, Kunststoffe, Leichtmetallwerkstoffe und/oder Verbundwerkstoffe hieraus. Ein solcher Messerkopf weist einen Tragkörper auf, in dem mindestens eine nach radial außen offene Ausnehmung zur Aufnahme eines Messers und eines über eine Spannschraube betätigbaren Spannbackens vorgesehen sind. Mittels des Spannbackens wird das Messer in der Ausnehmung festgespannt. Die Ausnehmung weist einen Anschlag mit einer nach radial innen gerichteten Anschlagfläche auf. Durch diese Ausgestaltung ist es möglich, das Messer von Hand in die Ausnehmung einzusetzen, gegen die Kraft eines Federelementes leicht gegen den Boden zu drücken und dabei das Messer so zu verschwenken, dass die ausgebildete Anschlagfläche in Überdeckung zum Anschlag in der Ausnehmung gelangt. Wird das Messer losgelassen, schlägt es selbsttätig an den Anschlag an, sodass es exakt vorpositioniert ist und über den Spannbacken nur noch festgespannt und nicht mehr positioniert werden muss.

Im Betrieb unterliegen die Messer einem natürlichen Verschleiß und müssen von Zeit zu Zeit nachgeschärft werden. Das Schärfen erfolgt in der Regel dadurch, dass das Messer an der Spanfläche abgeschliffen wird. Dadurch dass beim Abschleifen Material abgetragen wird, wird das Messer nicht nur dünner, sondern in Folge des Freiwinkels auch kürzer. Wird das Messer anschließend wieder in den Messerkopf eingesetzt, liegt die Hauptschneide auf einem anderen Flugkreismesser, als vor dem Schärfen.

Bei dem in der WO 02/40231 A2 beschriebenen Werkzeug wird die Profilkontur des Schneidmessers zum Schärfen komplett nachgearbeitet und das Messer anschließend entlang einer schrägen Fläche im Tragkörper so verschoben, dass seine radiale und axiale Lage verändert wird, um dadurch den Flugkreisdurchmesser des Profilmessers wiederherzustellen. Um die notwendige Nachstellung für den Bediener erkennbar zu machen, wird nach dem Schärfen des Profilmessers eine Seitenfläche, die als Referenzkante gegenüber der Stirnseite des Tragkörpers dient, um einen entsprechenden Betrag abgeschliffen.

Die DE 31 20 962 A1 offenbart ein Verfahren zum Schärfen von Messern für Messerköpfe, bei dem vorgesehen ist, dass das Schleifen des Profils unter Verwendung einer Schleifschablone durchgeführt wird und mit Hilfe ein- und derselben Schleifschablone mindestens eine zur Positionierung des Messers im zugehörigen Messerkopf dienende Anschlagnase als Bestandteil des Messerprofils mitgeschliffen wird.

Hiervon ausgehend liegt der Erfindung die Aufgabe zugrunde, ein Verfahren zum Schärfen eines Profilmessers anzugeben, das es ermöglicht, dass die Hauptschneide nach dem Schärfen und Wiedereinsetzen in den Messerkopf auf demselben Flugkreisdurchmesser liegt wie vor dem Schärfen. Zur Lösung dieser Aufgabe zeichnet sich das Verfahren dadurch aus, dass die Anschlagfläche um einen zweiten Betrag abgeschliffen wird.

Dabei ist es unerheblich, ob zuerst die Spanfläche oder zuerst die Anschlagfläche abgeschliffen wird, weil vorzugsweise der zweite Betrag in einer vorgegebenen Abhängigkeit zum ersten Betrag steht.

Durch die geometrischen Abhängigkeiten am Messer kann errechnet werden, um welchen zweiten Betrag die Anschlagfläche abgeschliffen werden muss, wenn die Spanfläche um einen ersten Betrag abgeschliffen wurde oder umgekehrt. Dadurch, dass die Lage der Anschlagfläche am Messer verändert wird, wird das Messer beim Einsetzen in die Ausnehmung des Tragkörpers weiter nach radial außen positioniert und die Hauptschneide nimmt damit wieder den ursprünglichen Flugkreisdurchmesser ein.

Vorzugsweise liegt der zweite Betrag, um den die Anschlagfläche abgeschliffen wird, im Bereich von 0,1 bis 3 mm insbesondere vorzugsweise im Bereich von 0,4 bis 1,5 mm und weiterhin vorzugsweise im Bereich von 0,5 mm.

Wenn die Spanfläche nicht parallel zum gegenüberliegenden Rücken geschliffen wird, sondern in einem Winkel hierzu, verlaufen an dem geschärften Messer die Spanfläche und der Rücken nicht zueinander parallel. Die Spanfläche kann dann so abgeschliffen werden, dass eine Dicke des Messers im Bereich der Hauptschneide kleiner ist als eine Dicke an dem bezogen auf die Radialrichtung inneren Ende.

Der Winkel, mit dem die Spanfläche gegenüber dem Rücken geschliffen wird, liegt im Bereich von 0° bis 6°, vorzugsweise im Bereich von 1,5° bis 3° und insbesondere vorzugsweise im Bereich von 1,75° bis 2,5°.

Die Anschlagfläche ist vorzugsweise die untere Wandung einer Rechtecknut. Die Anschlagfläche kann aber auch die obere Wandung eines Vorsprungs sein.

Vorzugsweise ist bezogen auf die Radialrichtung am inneren Ende (Unterseite) des Messers mindestens eine Radialnut ausgebildet, die insbesondere vorzugsweise gegenüber der Längsrichtung in einem Winkel verläuft, der im Bereich von 0° bis 50°, bevorzugt im Bereich von 10° bis 40°, insbesondere bevorzugt im Bereich von 20° bis 30° liegen kann.

Ein Messerkopf zur spanenden Bearbeitung von Werkstoffen, insbesondere Holzwerkstoffen, Kunststoffen, Leichtmetallwerkstoffen und/oder Verbundwerkstoffen hieraus, mit einem Tragkörper, in dem mindestens eine nach radial außen offene Ausnehmung zur Aufnahme eines Messers und eines über eine Spannschraube betätigbaren Spannbackens, mittels dessen das Messer in der Ausnehmung festspannbar ist, vorgesehen sind, wobei die Ausnehmung einen Anschlag mit einer nach radial innen gerichteten Anschlagfläche aufweist, und das Messer gegen die Kraft mindestens eines elastischen Elements in die Ausnehmung einsetzbar und mit einer an ihm ausgebildeten Anschlagfläche an die Anschlagfläche des Anschlags anlegbar ist, zeichnet sich dadurch aus, dass das Messer nach dem vorstehend beschriebenen Verfahren geschärft wurde.

Mit Hilfe einer Zeichnung sollen Ausführungsbeispiele der Erfindung nachfolgend näher beschrieben werden. Es zeigen:

Figur 1      - eine perspektivische Teil-Explosionsdarstellung des Messerkopfes;

Figur 2      - ein vergrößerter Ausschnitt aus Figur 1 ;

Figur 3      - die Ansicht gemäß Sichtpfeil III nach Figur 2;

Figur 4      - Profilmesser in Seitenansicht;

Figur 5      - Profilmesser in Seitenansicht;

Figur 6      - die perspektivische Darstellung von Profilmessern;

Figur 7      - die Seitenansicht von Profilmessern;

Figur 8      - verschiedene Ansichten eines Profilmessers;

Figur 9      - die unterschiedliche Einbaulage eines Profilmessers;

Figur 10      - die Teildarstellung eines Profilmesserkopfes;

Figur 11      - die Teildarstellung eines Profilmesserkopfes;

Figur 12      - die Teildarstellung eines Profilmesserkopfes mit einem fehlerhaft dargestellten Messerprofil;

Figur 13      - die Darstellung der geometrischen Verhältnisse zur Berechnung unterschiedlicher Keilwinkel;

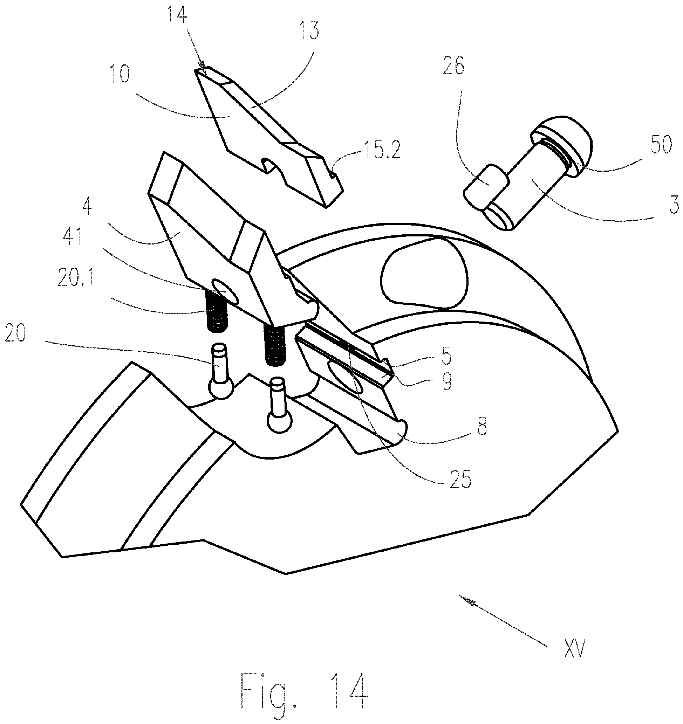

Figur 14      - eine perspektivische Teildarstellung eines Messerkopfes;

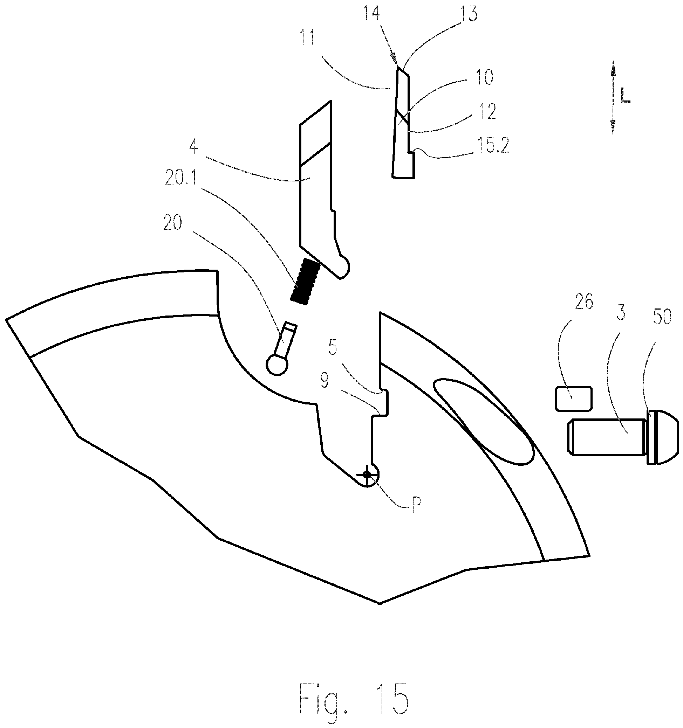

Figur 15      - die Ansicht gemäß Sichtpfeil XV nach Figur 14;

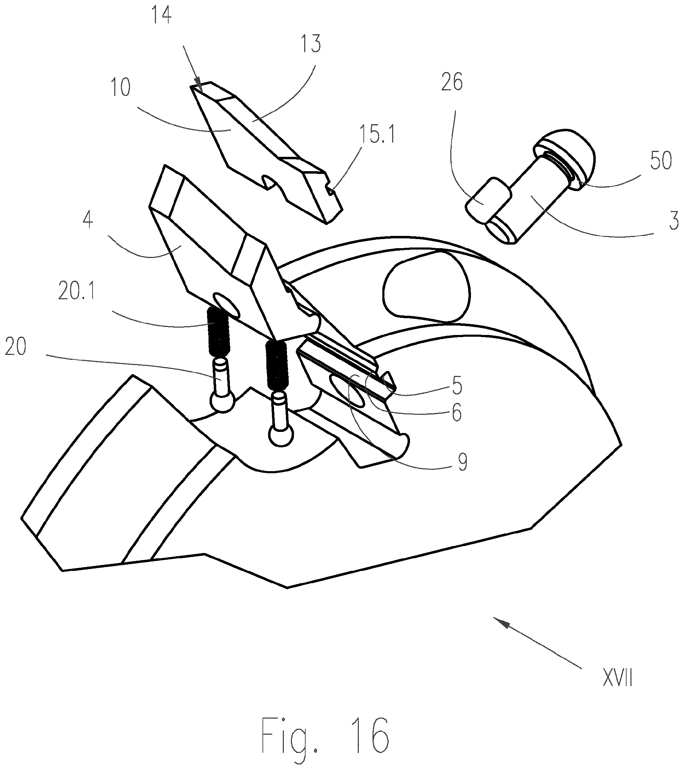

Figur 16      - eine perspektivische Teildarstellung eines Messerkopfes;

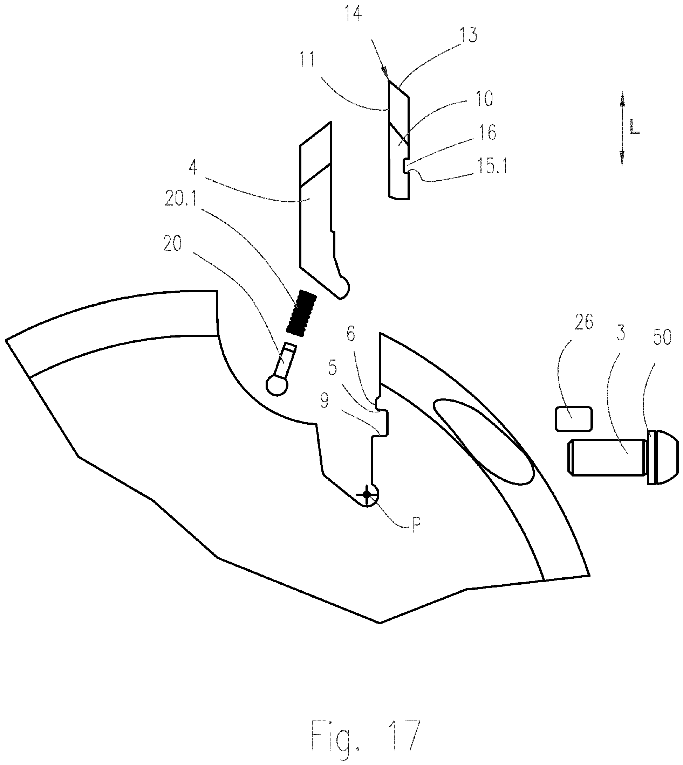

Figur 17      - die Ansicht gemäß Sichtpfeil XVII nach Figur 16.

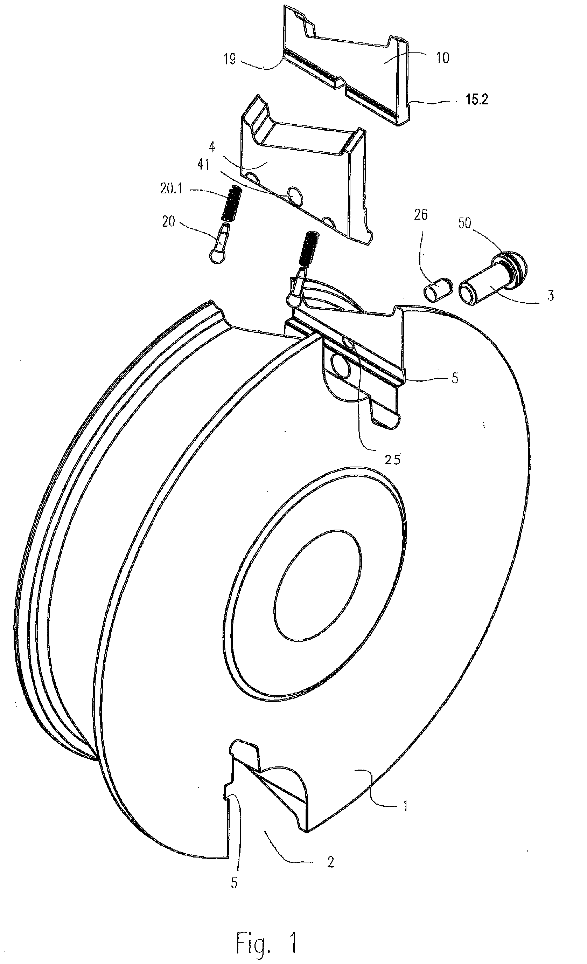

Der Aufbau des Messerkopfes, mit dem insbesondere Holzwerkstoffe, Kunststoffe, Leichtmetallwerkstoffe oder Verbundwerkstoffe spanend bearbeitet werden können, lässt sich den Figuren 1 bis 3 entnehmen.

Er besteht aus dem Tragkörper 1, in dem mehrere regelmäßig zueinander beabstandete, nach radial außen offene Ausnehmungen 2 vorgesehen sind. In den Ausnehmungen 2 wird jeweils ein Messer 10 mittels eines Spannbackens 4 und einer Spannschraube 3 mit einer Unterlegscheibe 50, aufgesetzt ist, verspannt. In er Ausnehmung 2 ist eine in Axialrichtung A verlaufende Nut 9 eingebracht, deren radial außenliegende Wandung einen Anschlag 5 ausbildet, der mit einer am Messer 10 vorgesehenen Anschlagfläche 15.1 bzw. 15.2 zusammenwirkt. Der Spannbacken 4 weist an seinem radial inneren Ende einen Fuß 40 auf, der in einer in der Ausnehmung 2 eingebrachten Hinterschneidung 8 sitzt. Die Kontur der Hinterschneidung 8 ist der Kontur des Fußes 40 angepasst. Die Umfangskontur des Spannbackens 4 entspricht im Wesentlichen der Profilierung des Messers 10, um eine sichere Abstützung des Messers 10 im Betrieb und ein Ausbrechen der Schneide 14 zu verhindern. Im Übrigen dient die Profilierung des Spannbackens 4 vor allem zum verbesserten Spanablauf, bzw. ist mit einer Spanleitstufe gleichzusetzen.

Im Spannbacken 4 ist eine Gewindebohrung 41 vorgesehen, in die die Spannschraube 3 eingeschraubt werden kann; sowie zwei schräg verlaufende Bohrungen 42, in die je ein elastisches Element 20 eingesteckt werden kann. Alternativ oder kumulativ können auch Federelemente 20.1 vorgesehen sein. An der der Nut 9 zugewandten Seite des Spannbackens 4 ist ein in Axialrichtung A verlaufender Vorsprung 44 vorgesehen, der mit einer in der Spanfläche 11 des Messers 10 in Axialrichtung A verlaufenden Nut 19 zusammenwirkt. Zur axialen Positionierung des Messers 10 ist an seiner Unterseite 11.2 eine Positioniernut 101 vorgesehen, die auf einen in eine in der radialen Wandung der Nut 9 eingebrachte Bohrung 25 einsetzbaren Positionierstift 26 aufgesetzt werden kann. Sie übernimmt keine Haltekräfte.

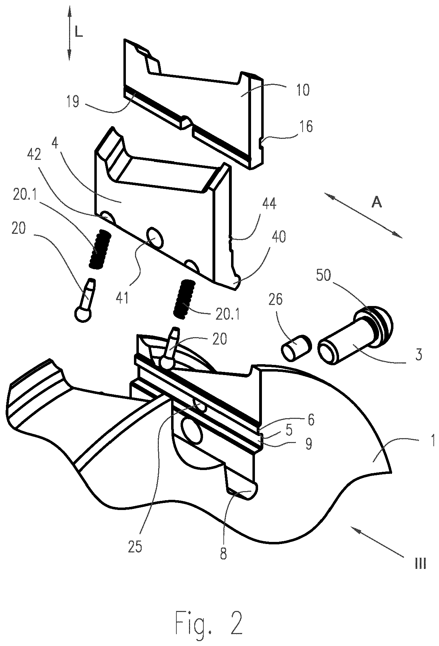

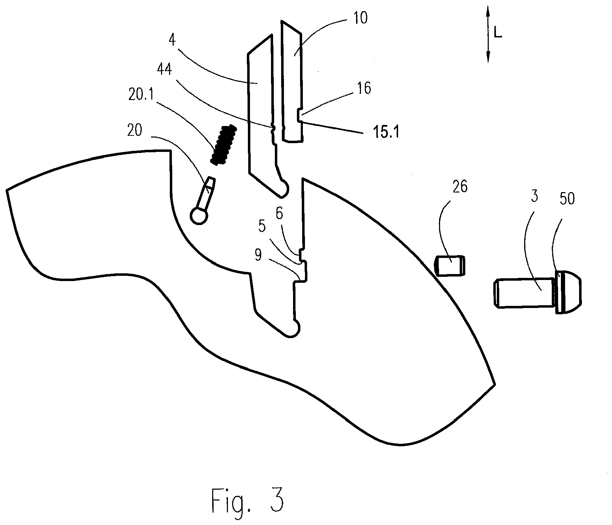

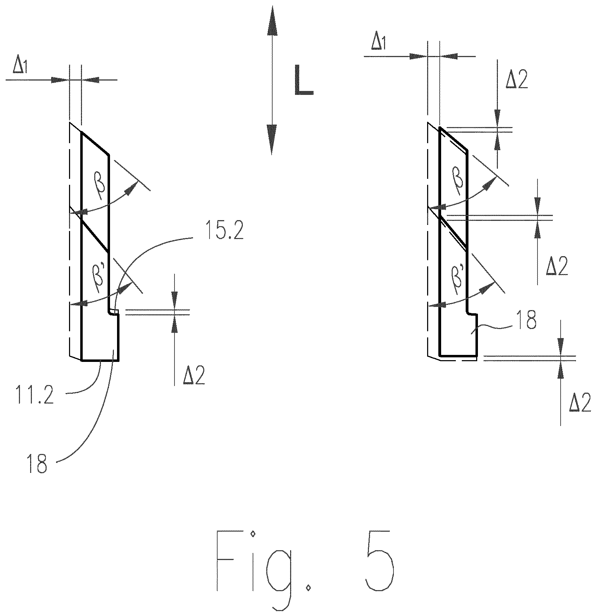

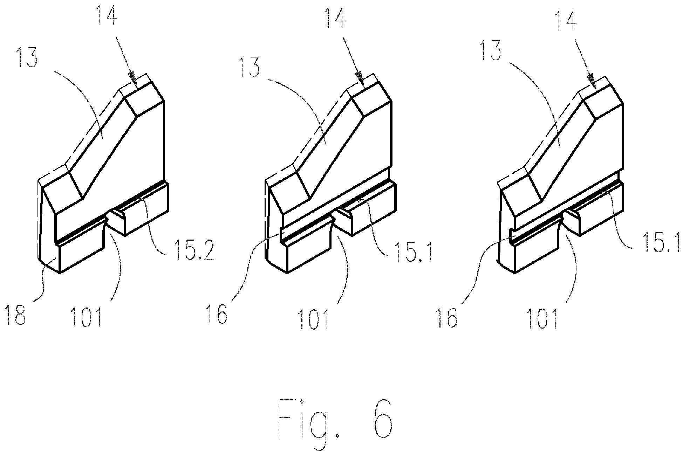

Das Messer 10 weist an seinem der Spanfläche 11 gegenüberliegenden Rücken 12 eine in Axialrichtung A verlaufende Nut 16 mit einer Anschlagfläche 15.1 bzw. einer in Axialrichtung A verlaufenden Vorsprung 18 mit einer Anschlagfläche 15.2 auf, die mit dem in der Ausnehmung 2 im Tragkörper 1 ausgebildeten Anschlag 5 mit einer nach radial innen gerichteten Anschlagfläche, der an der oberen Wandung der in der Ausnehmung verlaufenden Nut 9 bzw. einem Vorsprung 6 vorgesehen ist (Figuren 2, 3), zusammenwirkt. Die Anschlagfläche 15.2 ist an einem Vorsprung 18 (vgl. Figur 5) oder an der dem Fuß abgewandten Wandung 15.1 einer in Axialrichtung A verlaufenden Nut 16 (vgl. Figur 6) ausgebildet sein.

Grundsätzlich ist es vorteilhaft, wenn die Nuten 19 und 16 nicht in derselben Ebene verlaufen, weil dies den Querschnitt des Messers 10 so weit schwächen würde, dass eine Bruchgefahr bestehen kann. Wenn die Nut 19 oberhalb der Nut 16 angeordnet ist, liegt die Nut 19 so dicht an der Schneidkante, dass die Profiltiefe des Messers 10 eingeschränkt würde. Die Anschlagfläche 15.1 oder 15.2 kann gegenüber der Längsachse L in einem Winkel $\alpha$ von 90° bis 110° geneigt sein. Bevorzugt beträgt der Winkel $\alpha$ 92°.

Zur Montage und Einspannung des Messers 10 wird dieses zunächst auf den Spannbacken 4 aufgelegt, mit seiner Positioniernut 101 gegenüber dem Positionierstift 26 in Axialrichtung A positioniert und mit der Nut 19 auf einen am Spannbacken 4 ausgebildeten Vorsprung auf- bzw. angelegt (Montagenut). Die Unterseite 11.2 des Messers 10 liegt dabei auf den in die Bohrungen 42 eingesteckten aus einem Elastomer bestehenden elastischen Elementen 20 bzw. den Druckfedern 20.1 auf. Die Elemente 20, die auch durch die Druckfedern 20.1 ersetzt werden können, haben einen Durchmesser von etwa 2mm. Über die Nut 19 und den Vorsprung sind das Messer 10 und der Spannbacken 4 formschlüssig miteinander verbunden, sodass das Messer 10, wenn der Spannbacken 4 nach radial innen gedrückt wird, mitgezogen wird. Beim Verschwenken des Spannbackens 4 um seinen Fuß 40 herum gelangen die Anschlagflächen 15.1 bzw. 15.2 am Messer 10 und der Anschlag 5 in der Ausnehmung 2 in Überdeckung. Wird der Spannbacken 4 entlastet (losgelassen) drücken die elastischen Elemente 20 das Messer 10 nach radial außen, bis die Anschlagfläche 15.1 bzw. 15.2 mit dem Anschlag 5 in Kontakt gelangt und dadurch das Messer 10 nach radial außen positioniert wird. Durch Eindrehen der Spannschraube 3 in die Gewindebohrung 41 verschwenkt der Spannbacken 4 weiter und spannt das Messer 10 in der Ausnehmung 2 fest. Anstelle der elastischen Elemente 20, die in die Bohrungen 42 im Spannbacken 4 eingesetzt sind, können auch elastische Elemente verwendet werden, die in die Unterseite 11.2 des Messers 10 eingesteckt sind.

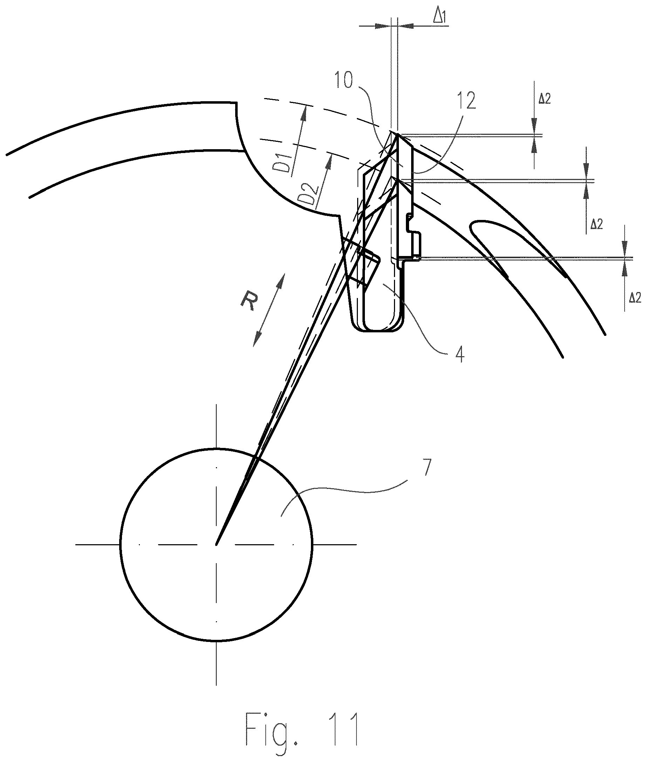

Bei dem in Figur 11 dargestellten Ausführungsbeispiel gleitet der Spannbacken 4 beim Verspannen des Messers 10 in der Ausnehmung in Richtung nach radial außen. Hier ist ein Messer 10 dargestellt, bei dem die Spanfläche 11 parallel zum gegenüberliegenden Rücken 12 geschliffen wird.

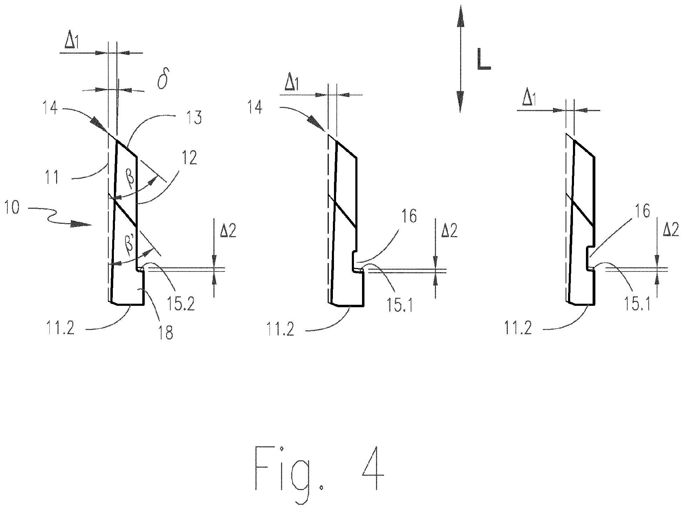

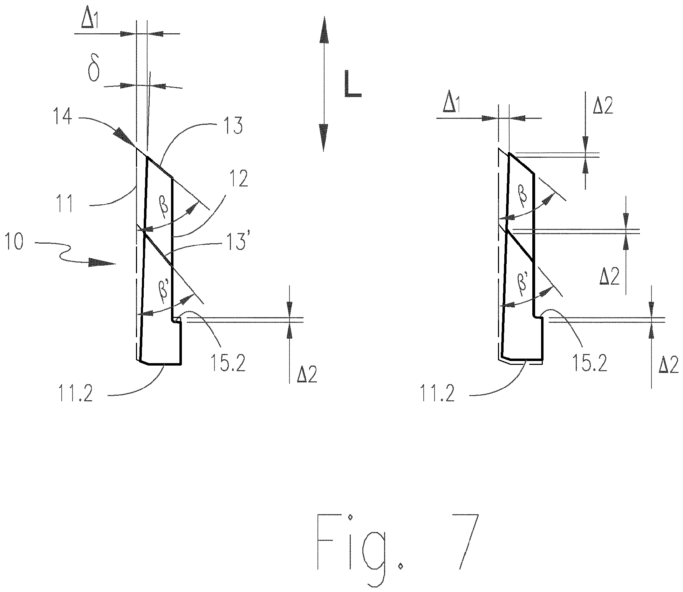

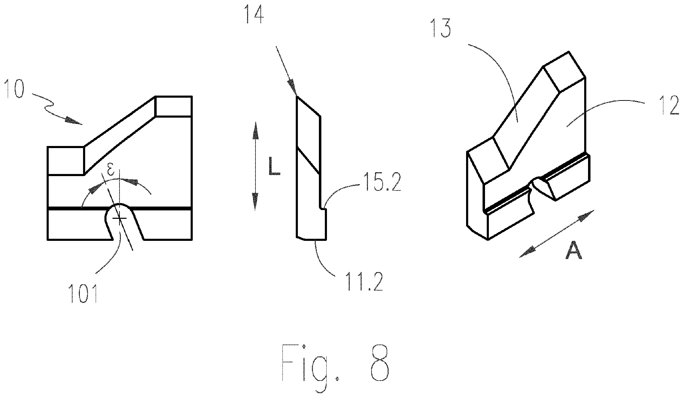

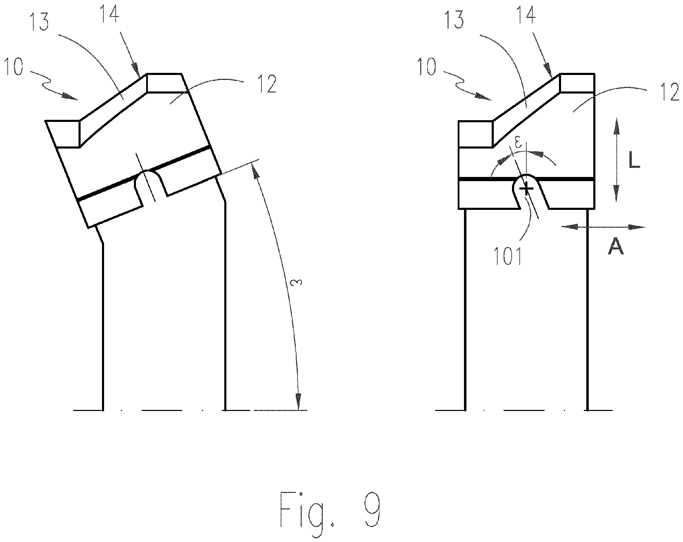

Figuren 4 bis 9 zeigen verschiedene Ausführungsformen von Messern 10. Das Messer 10 weist eine Spanfläche 11, einen dieser gegenüberliegenden Rücken 12 und eine an einem äußeren Ende 11.1 der Spanfläche 11 angeordnete Hauptschneide 14 auf. Wenn das Messer 10 als Profilmesser ausgebildet ist, verlaufen zwei Freiflächen 13, 13' in je einem Freiwinkel bzw. einem Keilwinkel $\beta$, $\beta'$ von der Hauptschneide 14 zum Rücken 12. Die Anschlagflächen 15.1, 15.2 am Rücken 12 des Messers 10 können unterschiedlich ausgebildet sein. Wie Figur 4 in der linken Abbildung zeigt, kann die Anschlagfläche 15.2 die obere Wandung eines Vorsprungs 18 sein. Die beiden übrigen Darstellungen zeigen, dass die Anschlagfläche 15.1 die untere Wandung einer Rechtecknut 16 sein kann. Für jeden beliebigen Punkt des Schneidenprofils existiert ein eigener Freiwinkel bzw. eine eigene Freifläche.

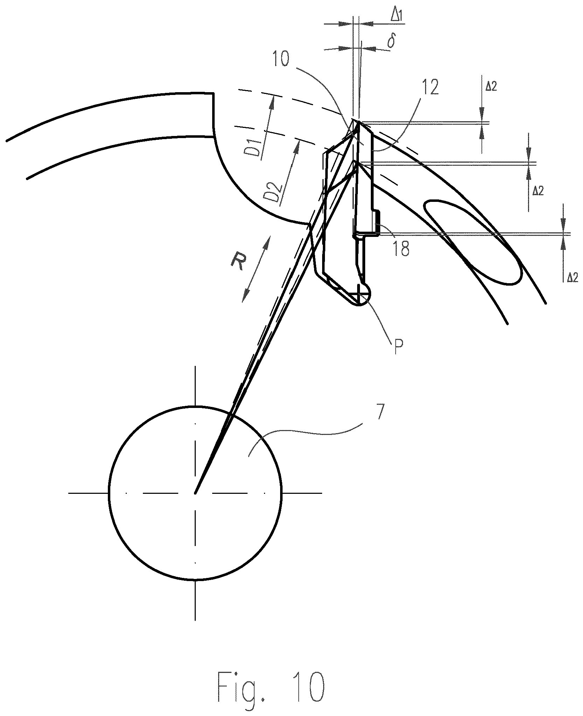

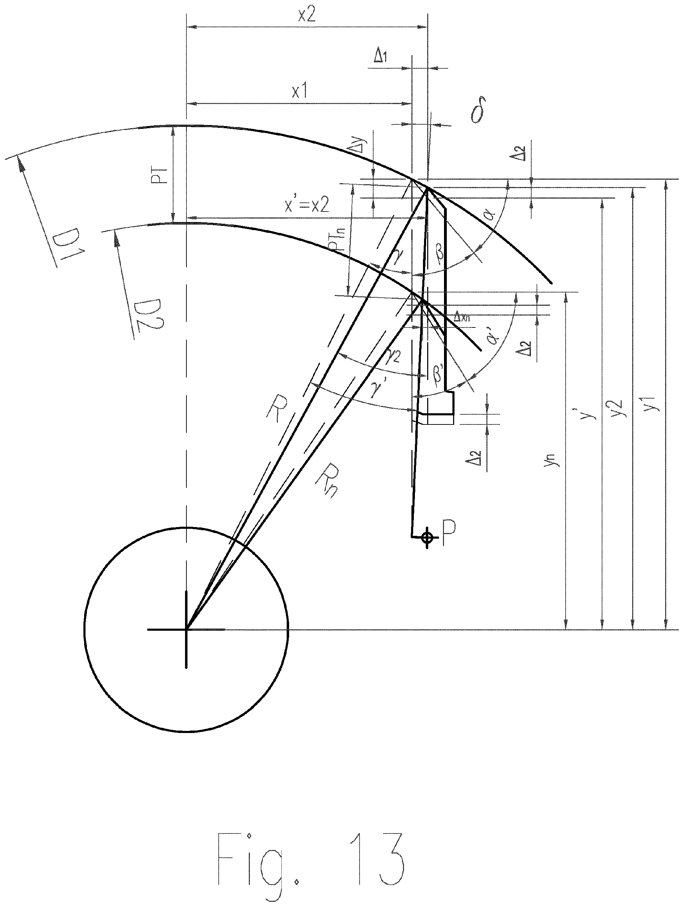

Zum Nachschärfen des Messers 10 wird ein erster Betrag $\Delta 1$ von der Spanfläche 11 abgeschliffen. Wie die Figuren erkennen lassen, wird das Messer 10 durch das Abschleifen dünner und kürzer, wodurch sich die Flugkreisdurchmesser D1, D2 (vgl. Figur 10) der Hauptschneide 14 nach dem Schärfen verändern. Um diese Längenveränderung des Messers 10 auszugleichen, ist erfindungsgemäß vorgesehen, dass zusätzlich auch der Anschlag am Rücken 12 des Messers 10 an der Anschlagfläche 15.1, 15.2 um einen zweiten Betrag $\Delta 2$ abgeschliffen wird, wodurch es möglich ist, dass das Messer 10 nach dem Schärfen weiter nach radial außen in den Messerkopf eingesetzt werden kann, bevor es an den Anschlag 5 im Tragkörper 1 anschlägt. Für diesen Ausgleich stehen der erste Betrag $\Delta 1$, der von der Spanfläche 11 abgeschliffen wird und der zweite Betrag $\Delta 2$, um den die Anschlagfläche 15.1, 15.2 reduziert wird, in einer geometrischen Beziehung, die anhand von Figur 13 nachfolgend definiert wird:

$$\Delta 2 = f(\beta, \gamma, \Delta 1)$$

Definiert wird jeweils der maximale Schärfabtrag $\Delta 1$ am höchsten Punkt des Profilmessers, der im Betrieb den Flugkreisdurchmesser D1 definiert. Der Schärfabtrag beträgt zwischen 0,1mm bis 3mm, vorzugsweise 1,0 - 2,0mm, jedoch besonders bevorzugt 1,5mm.

$$\text{Radius } R = \frac{D}{2}$$

Der Schärfabtrag wird wie folgt berechnet:

$$\Delta 2 = y2 - y'$$

Für die Abmessungen in Richtung y gelten folgende Berechnungen:

$$y' = y1 - \Delta y$$

$$y1 = R * \cos \alpha$$

$$\Delta y = \frac{\Delta 1}{\tan \beta}$$

$$y2 = R * \cos \gamma_2$$

Für die Abmessungen in Richtung x gilt:

$$x1 = R * \sin \gamma$$

$$x2 = x1 + \Delta 1$$

$$\gamma 2 = \arcsin \frac{x2}{R}$$

Schärfabtrag $\Delta 2$ in Abhängigkeit des Keilwinkels $\beta$ lässt sich nun wie folgt berechnen

$$\Delta 2 = R * (\cos \gamma 2 - \cos \gamma) + \frac{\Delta 1}{\tan \beta}$$

Berechnung Keilwinkel ($\beta'$) an beliebigen Punkt der Profilschneide bei z. B. Durchmesser D2, der sich aus der Profiltiefe PT ergibt

$$\text{Radius neu } R_n = \frac{D2}{2} = R - PT$$

Es gilt für Spanwinkel $\gamma 2$ im nachgeschärften Zustand:

$$\gamma 2 = \arcsin \frac{x1 + \Delta 1}{R}$$

Profiltiefe $PT_n$ entlang der neuen Spanfläche sowie die neue Maße in Richtung x und y errechnet sich wie folgt:

$$PT_n = R * \cos(\gamma2 - \delta) - \sqrt{Rn^2 - (R * \sin(\gamma2 - \delta))^2}$$

$$\Delta x_n = PTn * \sin(\delta)$$

$$x_n = x1 + \Delta1 - \Delta x_n$$

$$y_n = \sqrt{Rn^2 - x1^2}$$

Der neue Keilwinkel $\beta'$ lässt sich nun wie folgt abbilden:

$$\beta' = \arctan(\frac{\Delta1 - \Delta x_n}{y_n - \sqrt{R_n^2 - x_n^2} - \Delta_y})$$

Aufgrund dieser geometrischen Abhängigkeit ist es unerheblich, ob zunächst die Anschlagflächen 15.1, 15.2 um einen Betrag $\Delta2$ oder zuerst die Spanfläche 11 um einen Betrag $\Delta1$ abgeschliffen wird. Auch ist es unerheblich, ob die Spanfläche 11 parallel zum Rücken 12 oder in einem Winkel $\delta$ hierzu geschliffen wird. Maßgeblich ist nur, dass der Betrag $\Delta1$ an der Hauptschneide gemessen wird, wie dies aus Figuren 4 und 5 hervorgeht. Der Gesamtschärfabtrag $\Delta2$ kann im Bereich von 0,1 bis 3 mm liegen. Bevorzugt werden 0,5 bis 1,5 mm, insbesondere 0,6 mm abgetragen. Der Schärfwinkel $\Delta$ kann im Bereich von 0 bis 6° liegen. Bevorzugt liegt er im Bereich 1,5 bis 3°, insbesondere 1,75 bis 2,5°.

Der Gesamtschärfabtrag und Gesamtnachschärfwinkel ist die Betragsangabe des letzten Schärfzyklus. Um den Betrag der einzelnen Schärfungen zu errechnen gilt: Der einzelne Schärfabtrag errechnet sich durch den Gesamtschärfabtrag durch Anzahl der Schärfungen:

$$\Delta2' = \Delta2 \ / \ Anzahl \ der \ Sch\ddot{a}rfungen$$

$$\delta' = \delta \ / \ Anzahl \ der \ Sch\ddot{a}rfungen$$

wobei die Anzahl der Schärfungen mindestens 1 beträgt.

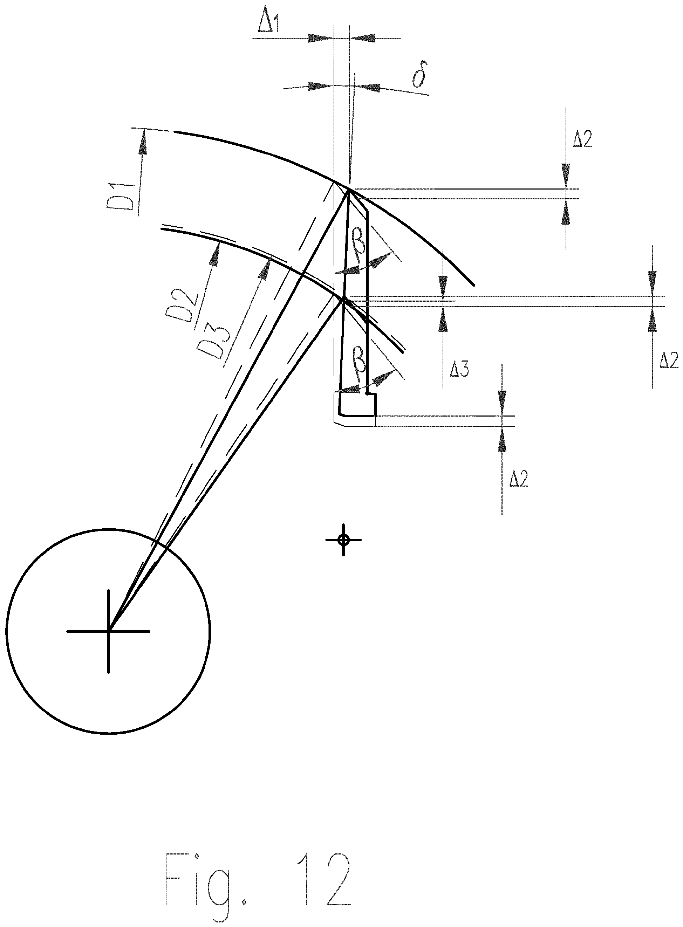

Wichtig ist, dass der Betrag $\Delta2$ exakt berechnet wird, weil sich anderenfalls eine Durchmesserabweichung $\Delta3$ für einen anderen beliebigen Punkt des Schneidenprofils ergäbe, wie dies in Figur 12 für den Durchmesser D3 beispielhaft dargestellt ist. Eine ähnliche Durchmesserabweichung $\Delta3$ ergäbe sich, wenn der Keilwinkel $\beta$ sich nicht für jeden beliebigen Punkt des Schneidenprofils ändern würde, sondern gleich wäre. Aus dem Grund müssen auch die Keilwinkel $\beta$ über das Schneidenprofil des Messers 10 vorher berechnet und das Profil des Messers 10 mit unterschiedlichen Keilwinkeln hergestellt werden.

Damit beim Nachschärfen nach dem beschriebenen Verfahren keine Durchmesser- und Profilveränderung entsteht, ist neben der exakten Abstimmung des Schleifmaßes D2 zu D1 ein sich in radialer Richtung verändernder Keilwinkel $\beta$ an dem Schneidenprofil des Messers eine wesentliche konstruktive Voraussetzung. Wie es in Figur 12 beispielhaft dargestellt ist, würde das Schneidenprofil bei einem konstanten Keilwinkel nur in einem Durchmesser, hier D1, konstant bleiben und an jedem anderen Durchmesser, beispielsweise D3, eine erhebliche Durchmesserabweichung D3 aufweisen. Aus dem Grund müssen auch die Keilwinkel $\beta$ über das Schneidenprofil des Messers 10 vorher berechnet und das Profil des Messers 10 mit radial veränderlichen Keilwinkeln hergestellt werden.

**Bezugszeichenliste**

1    Tragkörper
2    Ausnehmung
3    Spannschraube

| | |
|---|---|
| 4 | Spannbacken |
| 5 | Anschlag |
| 5.1 | Anschlagfläche |
| 6 | Vorsprung |
| 7 | Bohrung |
| 8 | Hinterschneidung |
| 9 | Nut |
| 10 | Messer |
| 11 | Spanfläche |
| 11.2 | Unterseite |
| 12 | Rücken |
| 13 | Freifläche |
| 13' | Freifläche |
| 14 | Schneide |
| 15.1 | Anschlagfläche |
| 15.2 | Anschlagfläche |
| 16 | Nut |
| 18 | Vorsprung |
| 19 | Sicherungsnut |
| 20 | Element |
| 20.1 | Federelement / Druckfeder |
| 25 | Bohrung |
| 26 | Positionierstift |
| 40 | Fuß |
| 41 | Gewindebohrung |
| 42 | Bohrung |
| 44 | Vorsprung |
| 50 | Scheibe |
| 101 | Positioniernut |
| A | Axialrichtung |
| $D_1$ | Flugkreisdurchmesser |
| $D_2$ | Flugkreisdurchmesser |
| $D_3$ | Flugkreisdurchmesser |
| $\Delta 1$ | Betrag |
| $\Delta 2$ | Betrag |
| $\Delta 3$ | Betrag |
| L | Längsachse |
| PT | Profiltiefe |
| R | Radius |
| $\alpha$ | Winkel |
| $\alpha'$ | Winkel |
| $\beta$ | Keilwinkel |
| $\beta'$ | Keilwinkel |
| $\delta$ | Winkel |
| $\gamma$ | Winkel |
| $\gamma'$ | Winkel |
| $\varepsilon$ | Winkel |

P    Drehpunkt Spannbacken

**Patentansprüche**

1.  Verfahren zum Schärfen eines Messers (10), insbesondere eines Profilmessers für einen in eine Bearbeitungsmaschine einsetzbaren Messerkopf, das eine Spanfläche (11), einen dieser gegenüberliegenden Rücken (12) und eine an einem äußeren Ende (11.1) der Spanfläche (11) angeordnete Hauptschneide (14) aufweist, wobei eine in einem Keilwinkel ($\beta$) zur Spanfläche (11) verlaufende Freifläche (13) von der Hauptschneide (14) zum Rücken (12) verläuft, und im Rücken (12) eine in einer Axialrichtung (A) verlaufende Anschlagfläche (15.1, 15.2) ausgebildet ist, in dem die Spanfläche (11) um einen ersten Betrag ($\Delta_1$) abgeschliffen wird, **dadurch gekennzeichnet dass** die Anschlagfläche (15.1, 15.2) um einen zweiten Betrag ($\Delta_2$) abgeschliffen wird.

2.  Verfahren nach Anspruch 1, **dadurch gekennzeichnet, dass** der zweite Betrag ($\Delta_2$) in einer vorgegebenen Abhängigkeit zum ersten Betrag ($\Delta_1$) steht.

3.  Verfahren nach Anspruch 2, **dadurch gekennzeichnet, dass** der zweite Betrag ($\Delta_2$) im Bereich von 0,1 bis 3 mm liegt.

4.  Verfahren nach einem der vorstehenden Ansprüche, **dadurch gekennzeichnet, dass** die Spanfläche (11) in einem Winkel ($\delta$) zum gegenüberliegenden Rücken (12) geschliffen wird, sodass an dem geschärften Messer (10) die Spanfläche (11) und der Rücken (12) nicht zueinander parallel verlaufen.

5.  Verfahren nach Anspruch 4, **dadurch gekennzeichnet, dass** die Spanfläche (11) so abgeschliffen wird, dass eine Dicke des Messers (10) im Bereich der Hauptschneide (14) kleiner ist als eine Dicke an dem in Radialrichtung (R) inneren Ende (11.2).

6.  Verfahren nach Anspruch 3, **dadurch gekennzeichnet, dass** der Winkel ($\delta$) im Bereich von 0° bis 6° liegt.

7.  Verfahren nach einem der vorstehenden Ansprüche, **dadurch gekennzeichnet, dass** die Anschlagfläche (15.1) die untere Wandung einer Rechtecknut (16) ist.

8.  Verfahren nach einem der Ansprüche 1 bis 6, **dadurch gekennzeichnet, dass** die Anschlagfläche (15.2) die obere Wandung eines Vorsprungs (18) ist.

9.  Verfahren nach einem der vorstehenden Ansprüche, **dadurch gekennzeichnet, dass** an der Unterseite (11.2) des Messers (10) mindestens eine Positioniernut (101) ausgebildet ist.

10.  Verfahren nach Anspruch 9, **dadurch gekennzeichnet, dass** die Positioniernut (101) bezogen auf die Längsrichtung (L) in einem Winkel ($\varepsilon$) verläuft.

11.  Verfahren nach Anspruch 10, **dadurch gekennzeichnet, dass** der Winkel ($\varepsilon$) im Bereich von 0° bis 50° liegt.

12.  Messerkopf zur spanenden Bearbeitung von Werkstoffen, insbesondere Holzwerkstoffen, Kunststoffen, Leichtmetallwerkstoffen und/oder Verbundwerkstoffen hieraus, mit einem Tragkörper (1), in dem mindestens eine nach radial außen offene Ausnehmung (2) zur Aufnahme eines Messers (10) und eines über eine Spannschraube (3) betätigbaren Spannbackens (4), mittels dessen das Messer (10) in der Ausnehmung (2) festspannbar ist, vorgesehen sind, wobei die Ausnehmung (12) einen Anschlag (5) mit einer nach radial innen gerichteten Anschlagfläche aufweist, und das Messer (10) gegen die Kraft mindestens eines elastischen Elements (20, 23, 24) in die Ausnehmung (2) einsetzbar und mit einer an ihm ausgebildeten Anschlagfläche (15.1, 15.2) an die Anschlagfläche des Anschlags (5) anlegbar ist, **dadurch gekennzeichnet, dass** die Spanfläche (11) in einem Winkel ($\delta$) zum gegenüberliegenden Rücken (12) um einen ersten Betrag ($\Delta_1$) abgeschliffen ist, sodass die Spanfläche (11) und der Rücken (12) nicht zueinander parallel verlaufen, und die Anschlagfläche (15.1, 15.2) um einen zweiten Betrag ($\Delta_2$) abgeschliffen ist.

**Claims**

1.  A method for sharpening a blade (10), in particular a moulding knife for a cutter head used in a processing machine, that comprises a cutting surface (11), a spine (12) opposite said cutting surface and a main cutting edge (14) arranged on an outer end (11.1) of the cutting surface (11), wherein a free surface (13) extending at a sharpening angle ($\beta$) to the cutting surface (11) extends from the main cutting edge (14) to the spine (12), and a stop surface (15.1, 15.2) extending in an axial direction (A) is configured in the spine in which the cutting surface (11) is ground down by a first amount ($\Delta_1$), **characterised in that** the stop surface (15.1, 15.2) is ground down by a second amount ($\Delta_2$).

**2.** The method according to claim 1, **characterised in that** the second amount ($\Delta_2$) is a predetermined function of the first amount ($\Delta_1$).

**3.** The method according to claim 2, **characterised in that** the second amount ($\Delta_2$) lies within a range of 0.1 to 3 mm.

**4.** The method according to one of the preceding claims, **characterised in that** the cutting surface (11) is ground at an angle ($\delta$) to the spine opposite, so that the cutting surface (11) and the spine (12) do not run parallel to each other on the sharpened blade (10).

**5.** The method according to claim 4, **characterised in that** the cutting surface (11) is ground down in such a way that a thickness of the blade (10) in the area of the main cutting edge (14) is smaller than a thickness at the inner end (11.2) in the radial direction (R).

**6.** The method according to claim 3, **characterised in that** the angle ($\delta$) lies within a range of 0° to 6°.

**7.** The method according to one of the preceding claims, **characterised in that** the strike surface (15.1) is the lower wall of a rectangular groove (16).

**8.** The method according to one of the preceding claims, **characterised in that** the stop surface (15.2) is the upper wall of a projection (18).

**9.** The method according to one of the preceding claims, **characterised in that** at least one positioning groove (101) is provided on the underside (11.2) of the blade (10).

**10.** The method according to claim 9, **characterised in that** the positioning groove (101) extends at an angle ($\epsilon$) in relation to the longitudinal direction (L).

**11.** The method according to claim 10, **characterised in that** the angle ($\epsilon$) lies within a range of 0° to 50°.

**12.** A cutter head for machining materials, particularly wood-based materials, plastics, light metal materials and/or composite materials, with a supporting body (1) in which at least one recess (2) that is open radially outwards is provided for accommodating a blade (10) and a clamping jaw (4) activated via a tensioning screw (3), by means of which the blade (10) can be securely clamped in the recess (2), wherein the recess (2) comprises an end stop (5) with a stop surface facing radially inwards, and the blade (10) can be inserted into the recess (2) against the force of at least one elastic element (20, 23, 24) and placed on the stop surface of the end stop (5) with a stop surface (15.1, 15.2) provided on it, **characterised in that** the cutting surface (11) is ground down at an angle ($\delta$) to the spine (12) opposite by a first amount ($\Delta_1$), so that the cutting surface (11) and the spine (12) do not extend parallel to each other, and the strike surface (15.1, 15.2) is ground down by a second amount ($\Delta_2$).

**Revendications**

**1.** Procédé d'affûtage d'une lame (10), en particulier d'une lame profilée pour une tête porte-lame pouvant être insérée dans une machine d'usinage, qui présente une face d'attaque (11), un dos (12) opposé à celle-ci, et un tranchant principal (14) disposé à une extrémité extérieure (11.1) de la face d'attaque (11), sachant qu'une face de dépouille (13) s'étendant selon un angle de coin ($\beta$) par rapport à la face d'attaque (11) s'étend du tranchant principal (14) au dos (12) et qu'une face de butée (15.1, 15.2) s'étendant dans une direction axiale (A) est réalisée dans le dos (12), dans lequel la face d'attaque (11) est rectifiée d'une première valeur ($\Delta_1$),
**caractérisé en ce que** la face de butée (15.1, 15.2) est rectifiée d'une deuxième valeur ($\Delta_2$).

**2.** Procédé selon la revendication 1,
**caractérisé en ce que** la deuxième valeur ($\Delta_2$) dépend de manière prédéterminée de la première valeur ($\Delta_1$).

**3.** Procédé selon la revendication 2,
**caractérisé en ce que** la deuxième valeur ($\Delta_2$) se situe dans la plage de 0,1 à 3 mm.

**4.** Procédé selon l'une des revendications précédentes,
**caractérisé en ce que** la face d'attaque (11) est rectifiée selon un angle ($\delta$) par rapport au dos (12) opposé, de sorte que sur la lame affûtée (10), la face d'attaque (11) et le dos (12) ne s'étendent pas parallèlement l'un à l'autre.

**5.** Procédé selon la revendication 4,
**caractérisé en ce que** la face d'attaque (11) est rectifiée de telle sorte qu'une épaisseur de la lame (10) dans la zone du tranchant principal (14) est inférieure à une épaisseur à l'extrémité (11.2) intérieure dans la direction radiale (R).

**6.** Procédé selon la revendication 3,
**caractérisé en ce que** l'angle ($\delta$) est dans la plage de 0° à 6°.

**7.** Procédé selon l'une des revendications précédentes,
**caractérisé en ce que** la face de butée (15.1) est la paroi inférieure d'une rainure rectangulaire (16).

**8.** Procédé selon l'une des revendications 1 à 6,
**caractérisé en ce que** la face de butée (15.2) est la paroi supérieure d'une protubérance (18).

**9.** Procédé selon l'une des revendications précédentes,
**caractérisé en ce qu'**au moins une rainure de positionnement (101) est ménagée sur le côté inférieur (11.2) de la lame (10).

**10.** Procédé selon la revendication 9,
**caractérisé en ce que** la rainure de positionnement (101) s'étend selon un angle ($\varepsilon$) par rapport à la direction longitudinale (L).

**11.** Procédé selon la revendication 10,
**caractérisé en ce que** l'angle ($\varepsilon$) est dans la plage de 0° à 50°.

**12.** Tête porte-lame pour l'usinage par enlèvement de copeaux de matériaux, en particulier de matériaux à base de bois, de matières plastiques, de matériaux à base de métaux légers et/ou de matériaux composites à base de ceux-ci, comprenant un corps porteur (1) dans lequel est prévu au moins un évidement (2) ouvert radialement vers l'extérieur pour recevoir une lame (10) et une mâchoire de serrage (4) qui peut être actionnée par une vis de serrage (3) et qui permet de serrer la lame (10) dans l'évidement (2), l'évidement (12) présentant une butée (5) ayant une face de butée dirigée radialement vers l'intérieur, et la lame (10) pouvant être insérée dans l'évidement (2) à l'encontre de la force d'au moins un élément élastique (20, 23, 24) et pouvant être appliquée par une face de butée (15.1, 15.2), réalisée sur ladite lame, contre la face de butée de la butée (5),
**caractérisée en ce que** la face d'attaque (11) est rectifiée d'une première valeur ($\Delta_1$) selon un angle ($\delta$) par rapport au dos (12) opposé, de sorte que la face d'attaque (11) et le dos (12) ne s'étendent pas parallèlement l'un à l'autre, et **en ce que** la face de butée (15.1, 15.2) est rectifiée d'une deuxième valeur ($A_2$).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

14 13 10 26 50 15.2 3 4 41 20.1 20 5 9 8 25

XV

Fig. 14

Fig. 15

Fig. 16

Fig. 17

**IN DER BESCHREIBUNG AUFGEFÜHRTE DOKUMENTE**

**In der Beschreibung aufgeführte Patentdokumente**

- EP 0938956 A1
- WO 2015157871 A
- EP 3204202 B1
- WO 0240231 A2
- DE 3120962 A1